# EUROPEAN PATENT SPECIFICATION

(11) **EP 4 177 984 B1**
(45) Date of publication and mention of the grant of the patent: **08.04.2026**
(21) Application number: 21838027.7
(22) Date of filing: 06.07.2021
(51) Int. Cl.: H01M 4/13, H01M 4/80, H01M 4/66, H01M 10/052, H01M 4/139, H01M 10/058, H01M 4/02

(54) **ALL SOLID STATE BATTERY AND MANUFACTURING METHOD THEREFOR**
FESTSTOFFBATTERIE UND HERSTELLUNGSVERFAHREN DAFÜR
BATTERIE TOUT SOLIDE ET SON PROCÉDÉ DE FABRICATION

(30) Priority: 06.07.2020 KR 20200083066; 17.07.2020 KR 20200089135; 21.07.2020 KR 20200090272
(43) Date of publication of application: 10.05.2023
(73) Proprietor: LG Energy Solution, Ltd., Seoul 07335 (KR)
(72) Inventor: LEE, Jung Pil, Daejeon 34122 (KR); HAN, Hyea Eun, Daejeon 34122 (KR); JUNG, Hye Ri, Daejeon 34122 (KR); CHO, Sung Ju, Daejeon 34122 (KR); PARK, Sang Joon, Daejeon 34122 (KR)
(74) Representative: Goddar, Heinz J.
(86) International application number: PCT/KR2021/008534
(87) International publication number: WO 2022/010211

(56) References cited:
- WO-A1-2020/080805
- JP-A- 2008 016 329
- KR-A- 20150 140 619
- KR-A- 20180 027 945
- KR-A- 20180 091 678
- KR-A- 20200 053 043

## Description

### [Technical Field]

The present invention relates to an all-solid-state battery and a method of manufacturing the same. More particularly, the present invention relates to an electrode including a porous support and a conductive coating layer formed on the porous support, an all-solid-state battery including the electrode, and a method of manufacturing the same.

### [Background Art]

A lithium ion secondary battery, which has high energy density, a low self-discharge rate, and a long lifespan, is suitable for a high-capacity battery. A liquid electrolyte of the lithium ion secondary battery has a problem of low safety in terms of liquid leakage and overheating, and therefore an all-solid-state battery has been suggested as a solution for solving such a problem. The all-solid-state battery may have a solid electrolyte layer including a solid electrolyte, unlike the conventional lithium ion secondary battery. The solid electrolyte layer is disposed between a positive electrode and a negative electrode in order to further perform the function of a separator.

Since the all-solid-state battery uses a solid electrolyte instead of a liquid electrolyte, there is no electrolyte evaporation due to temperature change or there is no liquid leakage due to external impact. As a result, the all-solid-state battery has an advantage in that the all-solid-state battery is safe from explosion and fire. Since the all-solid-state battery does not require parts configured to prevent liquid leakage and explosion, the weight and volume of the all-solid-state battery are reduced.

The portion of the solid electrolyte that contacts the positive electrode or the negative electrode is limited, whereby the contact area of the solid electrolyte is small, and it is not easy to form interfaces between the positive electrode and the solid electrolyte layer and between the negative electrode and the solid electrolyte layer. In the case in which it is not easy to form interfaces between the solid electrolyte layer and the positive electrode and between the solid electrolyte layer and the negative electrode, electrical resistance is high and output is reduced. In order to solve these problems, in unit cells each including the solid electrolyte, the positive electrode, the solid electrolyte layer, and the negative electrode are stacked and pressurized to reduce interfacial resistance.

The all-solid-state battery, which has improved safety, still has a problem due to lithium dendrites. While the all-solid-state battery is pressurized and charged and discharged, lithium dendrites may grow. The solid electrolyte layer is damaged or the volume of the battery is increased due to lithium dendrites.

Such a problem due to lithium dendrites is a problem still to be solved for the all-solid-state battery as well as the conventional lithium ion secondary battery.

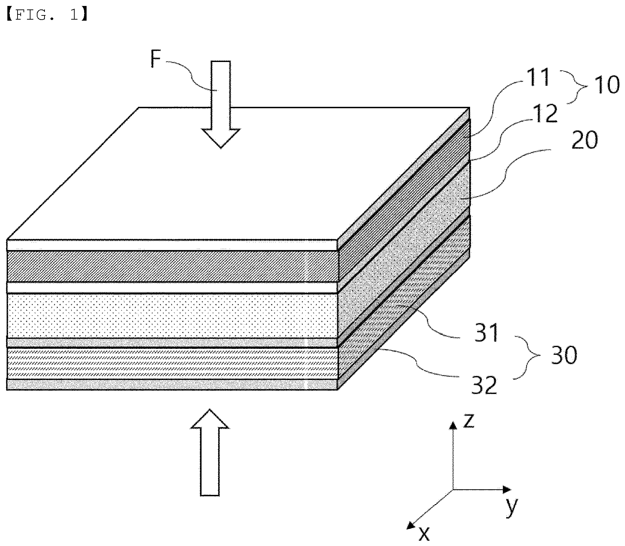

FIG. 1 is a schematic view of a conventional all-solid-state battery.

As can be seen from FIG. 1, the conventional all-solid-state battery includes a positive electrode 10 including a positive electrode current collector 11 and a positive electrode active material layer 12 formed on at least one surface thereof by coating, a solid electrolyte layer 20, and a negative electrode 30 including a negative electrode current collector 31 and a negative electrode active material layer 32 formed on at least one surface thereof by coating. In order to increase overall capacity of the all-solid-state battery, the negative electrode may be used as a lithium plating and stripping mechanism through a current collector alone or using lithium metal without a separate negative electrode active material layer 32, unlike FIG. 1.

In the conventional all-solid-state battery, pressurization force F is applied to the battery from above and below in order to reduce interfacial resistance between the positive electrode 10 and the solid electrolyte layer 20 and between the solid electrolyte layer 20 and the negative electrode 30. In the case in which the all-solid-state battery is initially charged and discharged while being pressurized, lithium is intercalated into the negative electrode active material, whereby the active material is expanded or the lithium is plated to the negative electrode 30, and therefore the thickness (z-axis) of the battery is increased and pressure applied to the interior of the battery is also increased. When the pressure applied to the interior of the all-solid-state battery is increased, the position and shape of the positive electrode 10, the solid electrolyte layer 20, and the negative electrode 30 in the all-solid-state battery are changed. Also, in the case in which the lithium is not uniformly plated on the negative electrode 30, the pressurization force F is not uniformly applied, whereby jigs that pressurize the all-solid-state battery from outside may be damaged.

The lithium metal used in the all-solid-state battery is soft, whereby the capacity and performance of a unit cells are changed depending on the degree of pressurization or over time. When the pressurization force F is increased, contact between the solid electrolyte and the lithium metal is increased, whereby the lithium metal is introduced into the solid electrolyte layer through cracks formed therein, and therefore a possibility of short circuit occurring in the battery is increased.

In order to solve this problem, it is necessary to uniformly distribute or reduce stress between the lithium metal and the solid electrolyte.

This problem may be equally applied to a conventional lithium secondary battery including a separator, which replaces the solid electrolyte.

In Patent Document 1, a stack including a positive electrode, a solid electrolyte layer, and a negative electrode is pressurized in order to improve conductivity, electron conductivity, and lithium ion conductivity. However, this patent document does not disclose reducing stress applied to an all-solid-state battery in order to prevent a cell short circuit phenomenon of a unit cell.

In Patent Document 2, a stack including a positive electrode, a solid electrolyte layer, and a negative electrode is pressurized in order to reduce interfacial resistance. However, this patent document does not disclose reducing stress applied to an all-solid-state battery in order to improve safety of a unit cell.
Japanese Patent Application Publication No. 2018-181451 (2018.11.15) ("Patent Document 1")
Japanese Patent Application Publication No. 2019-200890 (2019.11.21) ("Patent Document 2")
JP 2008 016 329 A provides a negative electrode material for the lithium secondary battery with porous support bodies having a porous structure, and a negative electrode active material which is carried by the porous support bodies, and which contains lithium. According to this constitution, a negative electrode surface area is increased, a battery internal resistance is reduced, and high rate discharging characteristics are improved.

KR 2015 0 140 619 A relates to a flexible current collector which has excellent electrical conductivity as well as being sufficiently flexible so as to be used in an electrode for a flexible battery, and a secondary battery using the same. The flexible current collector comprises: a conductive support body including a porous member having three-dimensional fine pores by accumulating fibers consisting of polymers, and meal powder injected and fixed with a binder in the fine pores of the porous member; a conductive metal layer formed on at least one side of the conductive support body; and a conductive adhesive layer which is interposed between the conductive support body and the conductive metal layer, and functions as an adhesive layer and secures conductivity, when forming the conductive metal layer as a plating method.

### [Disclosure]

### [Technical Problem]

The present invention has been made in view of the above problems, and it is an object of the present invention to provide a construction for uniformly applying pressure when pressurization is performed in order to form an interface of a lithium secondary battery or an all-solid-state battery. It is another object of the present invention to uniformly distribute or reduce stress in a lithium secondary battery or an all-solid-state battery.

It is a further object of the present invention to provide a lithium secondary battery or an all-solid-state battery configured such that cell short circuit is prevented while safety thereof is improved, whereby lifespan thereof is increased.

Other objects and advantages of the present invention will be understood through the following description. Meanwhile, it can be easily understood that objects and advantages of the present invention can be implemented through a means or a method set forth in the claims or a combination thereof.

### [Technical Solution]

In order to accomplish the above objects, the present invention provides an all-solid-state battery comprising a negative electrode including a porous support and a conductive coating layer formed on at least one surface of the porous support, wherein the porous support comprises an elastic material, wherein the porous support (310) has a pressurization-based thickness retention rate of 70% or more, the pressurization-based thickness retention rate being calculated as (thickness after pressurization/thickness before pressurization) x 100%.

When pressurized, the porous support may be deformed to reduce pressure. Here, pressure may be pressure in the porous support, or pressure outside the porous support may be reduced as the result of deformation of the porous support.

The porous support, which is a porous support having a plurality of pores, may be a porous polymer film or porous polymer non-woven fabric that has a plurality of pores and is elastically deformable.

The porous support may include a sheet or non-woven fabric made of a polyolefin-based porous substrate or at least one selected from the group consisting of glass fiber and polyethylene.

The porous support may further include at least one of ceramics, metal, or a metal alloy in a polymer having a porous structure.

The porous support may be uniaxially or biaxially oriented.

The porous support has a porosity of 10% to 90%, preferably 35% to 85%. Here, porosity is a ratio of empty portions to the total volume.

The porous support may include pores each having a diameter of 0.01 µm to 10 µm.

The porous support may have a pressurization-based elastic strain of 30% or less. Here, the pressurization-based elastic strain may be calculated as (thickness before pressurization - thickness under 20 MPa pressurization)/thickness before pressurization x 100%.

The porous support may have a thickness before pressurization of 5 µm to 300 µm.

When the porous support is pressurized, the thickness of the porous support may be decreased in a pressurization direction, and the area of the porous support may be increased in a direction perpendicular to the pressurization direction.

The electrode is a negative electrode, the negative electrode may include the conductive coating layer and a negative electrode active material layer, and the negative electrode active material layer may be formed on the conductive coating layer by plating through a charging process of a battery and may be stripped from the surface of the conductive coating layer through a discharging process of the battery.

The conductive coating layer may be a conductive material layer, preferably a metal or metal oxide layer, formed on the surface of the porous support or the surface of each pore formed in the porous support by coating.

The conductive coating layer may include a metal having electrical conductivity, specifically at least one metal powder and a metal oxide.

The conductive coating layer may include a lithium affinity material, and non-limiting examples of the lithium affinity material may be one or more selected from the group consisting of metals, including Au, Ag, Fe, Mg, Al, Ti, Cr, Ni, Cu, Zn, In, Sn, Pt, Co, Mn, Li, Bi, and Si; and metal oxides, including CuO, ZnO, MnO, and CoO.

The conductive coating layer may have a thickness of 100 nm to 5 µm.

The all-solid-state battery may include a positive electrode, the negative electrode, and a solid electrolyte layer interposed between the positive electrode and the negative electrode.

The conductive coating layer may be disposed on the surface opposite the solid electrolyte layer.

The solid electrolyte layer may include a solid electrolyte, the solid electrolyte may have an ion conductivity of 10⁻⁷ S/cm or more, and the solid electrolyte may include a polymer-based solid electrolyte, an oxide-based solid electrolyte, a sulfide-based solid electrolyte, or a mixture of two or more thereof.

In addition, the present invention provides a method of manufacturing an all-solid-state battery, the method including (S1) forming a stack comprising a positive electrode, a solid electrolyte layer, and a negative electrode, (S2) pressurizing the stack, and (S3) charging the pressurized stack while pressurizing the stack, wherein at least one of the negative electrodes is a porous support having a conductive coating layer formed on one surface of the porous support.

In addition, the present invention provides a method of manufacturing a lithium secondary battery including a separator, which replaces the solid electrolyte layer used in the method of manufacturing the all-solid-state battery.

The step (S2) and the step (S3) may be performed in reverse order or may be performed simultaneously. The charging step (S3) may include providing a negative electrode active material layer on the conductive coating layer.

The conductive coating layer may be formed by plating the conductive coating layer onto one surface of the porous support or laminating the conductive coating layer onto one surface of the porous support.

The ratio of the thickness of the porous support before pressurization of the stack to the thickness of the porous support after pressurization of the stack is 1:0.4 to 1:0.9. At this time, pressurization pressure may be 20 MPa.

During or after the step (S3), lithium may be plated between the conductive coating layer used as the negative electrode and the solid electrolyte layer.

The positive electrode may include a positive electrode active material layer including a metal oxide including lithium.

In the step (S2) and the step (S3), the porous support may be deformed, whereby pressure applied to the interior of the porous support may be reduced.

The positive electrode of the all-solid-state battery or the lithium secondary battery may include a porous support formed on at least one surface thereof.

The present invention may be provided through various combinations of the technical solutions described above.

### [Advantageous Effects]

According to an embodiment of the present invention, it is possible to provide a battery configured such that thickness expansion due to lithium plating is reduced using a negative electrode including a porous support, specifically a lithium secondary battery or an all-solid-state battery, and a method of manufacturing the same. The porous support may reduce internal stress generated due to lithium plating, whereby it is possible to inhibit occurrence of micro-short circuit. Consequently, it is possible to improve safety of the battery.

Stress generated due to lithium plating may be released as the result of compression of the porous support. Consequently, it is possible to inhibit physical change of lithium in the state in which the battery is not charged/discharged. In addition, it is possible to solve a problem in that lithium plated during charging/discharging of the battery grows, thus damaging a separator or a solid electrolyte layer. As a result, lifespan characteristics of the battery are improved.

According to an embodiment of the present invention, lithium discharged from a positive electrode during a charging process may be plated onto a conductive coating layer, whereby the plated lithium may be used as a negative electrode active material layer without the provision of a separate negative electrode active material layer. In addition, the plated lithium may be stripped during a discharging process. In an initial state, therefore, the battery does not include a separate negative electrode active material layer.

It is possible to inhibit occurrence of micro-short circuit caused as the result of lithium, which is physically soft, growing into a positive electrode along an interface (grain boundary) or a gap between solid electrolyte particles of the all-solid-state battery, in addition to charging and discharging, whereby it is possible to improve lifespan characteristics of the all-solid-state battery.

In addition, it is possible to inhibit occurrence of micro-short circuit caused as the result of the lithium growing along a gap of the separator or through the separator, whereby it is possible to improve lifespan characteristics of the lithium secondary battery.

### [Description of Drawings]

FIG. 1 is a schematic view of a conventional all-solid-state battery.
FIG. 2 is a schematic view roughly showing the structure of a negative electrode according to an embodiment of the present invention.
FIG. 3 is a schematic view roughly showing the structure of a negative electrode including a negative electrode active material layer according to an embodiment of the present invention.
FIG. 4 is a schematic view of an all-solid-state battery according to an embodiment of the present invention.
FIG. 5 is a schematic view of the all-solid-state battery according to the embodiment of the present invention after charging and pressurization.
FIG. 6 is a graph showing pressurization-based thickness retention rates of porous supports according to Example 1-1, Example 1-2, Example 1-3, and Comparative Example 1-1.
FIGS. 7 and 8 are photographs of the porous support according to Example 1-1 before/after pressurization.
FIGS. 9 and 10 are photographs of the support according to Comparative Example 1-1 before/after pressurization.
FIG. 11 is an SEM photograph showing the surface of a negative electrode current collector according to Example 2-3.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

In addition, the terms "about" and "substantially" used throughout the specification of the present invention are used as meanings that approximate numerical values when manufacture and material tolerances peculiar to mentioned meanings are suggested and are used in order to prevent a conscienceless infringer from unjustly using disclosure containing accurate or absolute numerical values mentioned in order to assist in understanding of the present application.

Throughout the specification of the present invention, the expression "combination(s) thereof" included in a Markush expression means a mixture or combination of one or more selected from the group consisting of elements set forth in the Markush expression and means one or more selected from the group consisting of the elements.

The present invention relates to an all-solid-state battery comprising a negative electrode including a porous support and a conductive coating layer formed on at least one surface of the porous support.

In the following description, only a negative electrode will be described as including a porous support and a conductive coating layer formed on at least one surface of the porous support for the sake of convenience, which, however, may be applied to a positive electrode, and an all-solid-state battery according to the present invention may use at least one of a positive electrode and a negative electrode having a structure according to the present invention.

Hereinafter, an all-solid-state battery according to the present invention will be described in detail.

A negative electrode used in an all-solid-state battery may use a graphite-based material as a negative electrode active material. In the case in which the graphite-based material is used as the negative electrode active material, high interface resistance with a solid electrolyte layer occurs. In order to reduce such interface resistance, it is necessary to enlarge the interface. In this process, however, the content of the negative electrode active material is reduced, and therefore energy density is also reduced.

In the case in which Si or Sn is used as the negative electrode active material, it is possible to increase energy density, compared to the case in which the graphite-based material is used. Since Si or Sn has a great volume expansion rate, however, it is difficult to maintain contact with a solid electrolyte. As a result, the performance of the all-solid-state battery is reduced.

Referring to FIG. 1, in the case in which lithium metal is used as a negative electrode or only a current collector is used alone in order to manufacture a battery having high energy density and high output, there is a problem in that lithium is plated between the negative electrode and a solid electrolyte layer during charging/discharging of a battery. As a result, internal stress of an electrode assembly is increased, whereby abnormal behavior of the battery occurs.

In order to solve the above problem, the inventors of the present application provide a new-concept negative electrode for all-solid-state batteries.

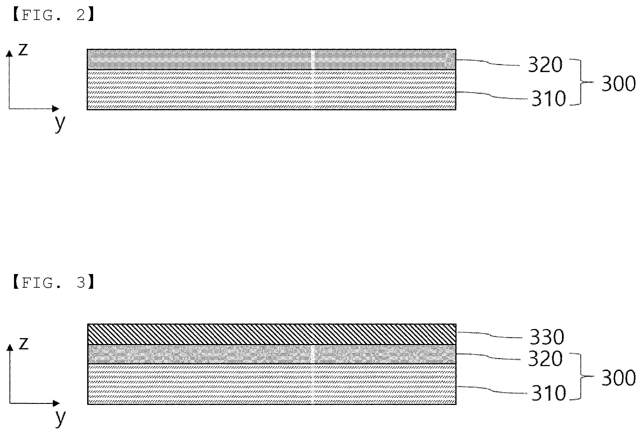

Specifically, an all-solid-state battery according to an embodiment of the present invention includes a porous support and a conductive coating layer as a negative electrode current collector in a negative electrode. This is shown in FIG. 2. Referring to FIG. 2, a negative electrode 300 according to an embodiment of the present invention includes a porous support 310; and a conductive coating layer 320 located on the porous support.

According to an embodiment of the present invention, a problem in that the negative electrode is expanded due to lithium plating may be solved by the porous support. In addition, the volume of the original porous support is reduced as the result of lithium plating, whereby the porous support may function as a thin film current collector. As a result, energy density may be increased. Since stress generated due to lithium plating is released by the porous support, it is possible to inhibit physical change of lithium in the state in which the battery is not charged/discharged. It is possible to solve a problem in that lithium plated during charging/discharging of the battery grows, thus damaging the solid electrolyte layer. As a result, lifespan characteristics of the battery are improved.

As described above, the negative electrode according to the present invention uses a porous support and a conductive coating layer formed on the porous support as a negative electrode current collector.

The negative electrode may include the negative electrode current collector and a negative electrode active material layer. This is shown in FIG. 3. Referring to FIG. 3, a negative electrode 300 according to an embodiment of the present invention includes a negative electrode current collector 310 and 320 and a negative electrode active material layer 330.

The negative electrode active material layer is formed on the negative electrode current collector by plating through a charging process of a battery and is stripped from the surface of the negative electrode current collector through a discharging process of the battery.

That is, in the present invention, plated lithium generated during charging/discharging of the battery may be used as the negative electrode active material layer.

### (Porous support)

In a concrete embodiment of the present invention, the porous support may be used without limitations as long as the porous support has a plurality of pores and is elastically deformable while not disturbing the operation of the battery. For example, the porous support may be made of a material that has a plurality of pores and is elastically deformable, such as a porous polymer film substrate, a porous polymer non-woven fabric substrate, mesh, or porous foam.

In order for the porous support to be deformed when being pressurized to thus more effectively perform the function of reducing pressure, the porous support may be made of a material configured such that the thicknesses of the material before and after pressurization are similar to each other while the material is greatly deformable when being pressurized, i.e. a material having elastic force.

As an example, the material having elastic force may be at least one selected from the group consisting of high-density polyethylene, low-density polyethylene, linear low-density polyethylene, ultrahigh molecular weight polyethylene, polypropylene, polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene, and a mixture thereof.

In a concrete embodiment of the present invention, the porous polymer non-woven fabric substrate may be polyolefin, polyethylene terephthalate, polybutylene terephthalate, polyester, polyacetal, polyamide, polycarbonate, polyimide, polyetheretherketone, polyethersulfone, polyphenylene oxide, polyphenylene sulfide, or polyethylene naphthalene, which may be used alone or as a polymer mixture thereof.

In the case in which a polymer non-woven fabric substrate is porous but is not elastically deformed, the polymer non-woven fabric substrate does not correspond to a porous substrate applied to the present invention.

Since the porous support is made of an elastic material, the porous support may be deformed by pressure applied to the battery in order to disperse or reduce stress applied to the negative electrode.

In addition, a material similar to a material used in a separator of the lithium secondary battery or a solid electrolyte layer of the all-solid-state battery may be used for the porous support. The porous support may include a sheet or non-woven fabric manufactured using an olefin-based porous substrate including chemical resistant and hydrophobic polypropylene or at least one selected from the group consisting of glass fiber and polyethylene. The olefin-based porous substrate used for the porous support, which is a porous polyolefin substrate used for the separator of the secondary battery, has no inorganic coating layers formed on opposite surfaces thereof. As an example, the olefin-based porous substrate may be polyethylene or polypropylene.

The porous support may have a non-woven fabric structure or a uniaxially or biaxially oriented porous structure. The porous support may include a pore having a diameter of 0.01 µm to 10 µm. In addition, porosity of the porous support may range from 10% to 90%, preferably from 35% to 85%. For example, porosity of the porous support may be 35% or more, 40% or more, or 45% or more, and may be 85% or less, 80% or less, or 75% or less. The porous support may have appropriate elastic force within the above numerical range in order to release stress generated at the time of charging and discharging. The porous support has the minimum thickness strain capable of absorbing stress within the above numerical range and elastic force restorable after lithium plating and stripping within the range.

Here, porosity is a ratio of empty portions to the total volume. In the case in which the porous support has a plurality of micropores therein, as described above, stress generated in the battery may be reduced in a manner in which the size or number of the pores is reduced even though the structure of the porous support is not greatly changed.

In addition, the porous support according to the present invention may have a thickness of 5 µm to 300 µm, preferably 5 µm to 100 µm, before pressurization in order to efficiently reduce stress generated in the battery. More specifically, the thickness of the porous polymer support may be 5 µm or more, 10 µm or more, or 20 µm or more, and may be 100 µm or less, 80 µm or less, or 50 µm or less. The above numerical range is advantageous in minimizing reduction in energy density and achieving a stress relief effect. If the thickness of the porous support is too small, stress in the battery may not be reduced, which is undesirable. If the thickness of the porous support is too large, the performance of the battery may be reduced, compared to the size of the battery, which is also undesirable.

In the case in which the porous support is made of a material that has elastic force while having a plurality of pores, the size of the pores may be reduced or the number of the pores may be reduced, compared to the case in which a material that has merely elastic force is used, whereby change in position or form of the porous support may be reduced, and therefore it is possible to more effectively reduce stress in the battery. In addition, when pressure disappears due to elastic force, the pores may be easily restored to the original state thereof.

Furthermore, in the case in which the porous support is made of a material similar or identical to the separator of the lithium secondary battery or the solid electrolyte layer of the all-solid-state battery, it is possible to stack unit cells without a separate separator or insulating material being interposed between the unit cells.

At least one of ceramics, metal, or a metal alloy may be further included in the polymer having the porous structure of the porous support. Ceramics, metal, or a metal alloy may be included in the porous support such that the porous support performs the function of the negative electrode together with a negative electrode current collector layer. In this case, a separate conductive coating layer according to the present invention may not be necessary. In this case, however, a separate separator or insulating material may be necessary when the unit cells are stacked.

In an embodiment of the present invention, lithium ions discharged from the positive electrode may be plated on the negative electrode current collector. To this end, the negative electrode current collector is porous. In addition, the porous support is elastically deformable, and the thickness of the porous support may be reduced when the plated lithium forms a negative electrode active material layer between the conductive coating layer and the solid electrolyte layer. That is, the porous support may be compressed. Consequently, it is possible to reduce stress generated due to the plated lithium.

For example, the thickness of the porous support may be controlled to dampen stress generated depending on some or the entirety of the amount of the plated lithium. For example, in the case in which the amount of lithium plated by charging of the battery is 1 mAh/cm² for the positive electrode, the lithium may be plated on the negative electrode current collector to a thickness of 5 µm. In order for the porous support to dampen stress generated by the plated lithium, it is preferable for the porous support to have a porosity of 50% and a thickness of 10 µm. As another example, even when the loading amount of the positive electrode active material layer is increased and thus the amount of lithium plated on the negative electrode current collector is increased, it is possible to reduce the generated stress while the thickness of the porous support is reduced.

To this end, in a concrete embodiment of the present invention, the pressurization-based elastic strain of the porous support may be 30% or less. Here, the pressurization-based elastic strain may be calculated as (thickness before pressurization - thickness under 20 MPa pressurization)/thickness before pressurization x 100%.

In the present invention, the pressurization-based thickness retention rate of the porous support is 70% or more. Here, the pressurization-based thickness retention rate may be calculated as (thickness after pressurization/thickness before pressurization) x 100%. The thickness after pressurization may be a thickness under 20 MPa pressurization.

The porous support has elastic force, as described above. Even though lithium is plated between the negative electrode and the solid electrolyte layer during charging of the battery, therefore, the volume of the substrate may be reduced in proportion to the volume at which the lithium is plated. Consequently, it is possible to reduce expansion of the negative electrode due to lithium plating.

When the porous support is deformed, the porous support may be deformed in a thickness direction, the area of the porous support may be increased, or the porous support may be deformed in the thickness direction while the area of the porous support may be increased.

In addition, a micro-scale uneven pattern may be formed at the surface of the porous support in order to increase force of binding with the separator or the solid electrolyte layer.

### (Conductive coating layer)

The conductive coating layer is a metal layer formed on the surface of the porous support or the surface of each pore formed in the porous support by coating. The porous support performs the function of a current collector due to the conductive coating layer. Forming a layer only on the surface of the porous support by coating is good in the aspect of driving of the battery. During coating with metal, however, some of the metal may be formed on the surfaces of the pores formed in the porous support. As another example, a conductive material of the conductive coating layer may be uniformly disposed in the porous support.

The conductive coating layer may be formed on the porous support by coating. The coating method is not particularly restricted. For example, immersing, spin coating, dip coating, spray coating, doctor blade coating, solution casting, drop coating, physical vapor deposition (PVD), or chemical vapor deposition (CVD) may be used.

That is, the conductive coating layer has electrical conductivity. To this end, the conductive coating layer includes a metal having electrical conductivity. Here, the electrical conductivity is the degree of electrical conduction. Specifically, the degree at which a material or a solution is capable of carrying electric charge, which is a physical quantity, may be calculated as the reciprocal of resistance.

The conductive coating layer may include a metal having electrical conductivity, specifically at least one of metal powder and a metal oxide.

The conductive coating layer may include a lithium affinity material. Non-limiting examples of the lithium affinity material may be one or more selected from the group consisting of metals, including Au, Ag, Fe, Mg, Al, Ti, Cr, Ni, Cu, Zn, In, Sn, Pt, Co, Mn, Li, Bi, and Si, and metal oxides, including CuO, ZnO, MnO, and CoO.

In an embodiment of the present invention, the thickness of the conductive coating layer may range from 100 nm to 5 µm. More specifically, the thickness of the conductive coating layer may be 100 nm or more, 500 nm or more, or 1 µm, and may be 5 µm or less, 3 µm or less, or 2 µm or less. The above numerical range is advantageous in minimizing reduction in energy density.

### (Solid electrolyte layer)

In the present invention, the solid electrolyte layer includes a solid electrolyte. In a concrete embodiment of the present invention, the solid electrolyte has an ion conductivity of 10⁻⁷ S/cm or more, preferably 10⁻⁵ S/cm or more, and may include a polymer-based solid electrolyte, an oxide-based solid electrolyte, a sulfide-based solid electrolyte, or a mixture of two or more thereof.

In a concrete embodiment of the present invention, the solid electrolyte serves to transfer lithium ions in the electrode. Consequently, the solid electrolyte may be a material that has high ion conductivity, for example an ion conductivity of 10⁻⁵ S/cm or more or 10⁻⁴ S/cm.

In a concrete embodiment of the present invention, the polymer-based solid electrolyte may include a solid polymer electrolyte and a lithium salt.

For example, the solid polymer electrolyte may be formed by adding a lithium salt to a polymer containing a hetero element, such as oxygen, nitrogen, or sulfur, such that ions of dissociated salt are movable in the polymer.

In a concrete embodiment of the present invention, the polymer-based solid electrolyte may include a solid polymer electrolyte formed by adding a polymer resin to a solvated lithium salt.

In a concrete embodiment of the present invention, the polymer resin may include a polyether-based polymer, a polycarbonate-based polymer, an acrylate-based polymer, a polysiloxane-based polymer, a phosphazene-based polymer, a polyethylene derivative, an alkylene oxide derivative such as polyethylene oxide, a phosphoric acid ester polymer, poly agitation lysine, polyester sulfide, polyvinyl alcohol, polyvinylidene fluoride, a polymer containing an ionic dissociation group, or a mixture of two or more thereof.

Also, in a concrete embodiment of the present invention, the solid polymer electrolyte may include a branch-like copolymer formed by copolymerizing an amorphous polymer, such as polymethylmethacrylate (PMMA), polycarbonate, polysiloxane (pdms), and/or phosphazene, which is a comonomer, in the main chain of polyethylene oxide, which is a polymer resin, a comb-like polymer resin, and a crosslinking polymer resin, or may be a mixture of the polymers.

In a concrete embodiment of the present invention, the lithium salt may include Li⁺ as positive ions, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, F₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻, and (CF₃CF₂SO₂)₂N⁻ as negative ions.

In a concrete embodiment of the present invention, the sulfide-based solid electrolyte may include sulfur (S), and may include a metal belonging to Group 1 or 2 of the periodic table. Consequently, it is preferable for the sulfide-based solid electrolyte to have ion conductivity of the metal and to have electron insulation.

In a concrete embodiment of the present invention, the sulfide-based solid electrolyte may be a lithium ion conductive solid electrolyte including a compound represented by Formula 1 below.

[Formula 1] Lₐ₁M_{b1}P_{c1}S_{d1}Aₑ₁

In Formula 1 above, L indicates an element selected from among Li, Na, and K, wherein Li is preferable. M indicates an element selected from among B, Zn, Sn, Si, Cu, Ga, Sb, Al, and Ge. Thereamong, B, Sn, Si, Al, or Ge is preferable, and Sn, Al, or Ge is more preferable. A indicates I, Br, Cl, or F, wherein I or Br is preferable and I is more preferable. a1 to e1 indicate composition ratios of the respective elements, and a1:b1:c1:d1:e1 satisfies 1 to 12:0 to 1:1:2 to 12:0 to 5. For a1, 1 to 9 is preferable, and 1.5 to 4 is more preferable. For b1, 0 to 0.5 is preferable. For d1, 3 to 7 is preferable, and 3.25 to 4.5 is more preferable. For e1, 0 to 3 is preferable, and 0 to 1 is more preferable.

In a concrete embodiment of the present invention, the sulfide-based solid electrolyte may include Li, X, and S, wherein X may include at least one selected from the group consisting of P, Ge, B, Si, Sn, As, Cl, F, and I.

In a concrete embodiment of the present invention, the oxide-based solid electrolyte may include oxygen (O), and may include a metal belonging to Group 1 or 2 of the periodic table. Consequently, it is preferable for the oxide-based solid electrolyte to have ion conductivity of the metal and to have electron insulation.

In a concrete embodiment of the present invention, the oxide-based solid electrolyte may include Li, A, and O, wherein A may include at least one selected from the group consisting of La, Zr, Ti, Al, P, and I.

In a concrete embodiment of the present invention, the average particle diameter of the sulfide-based or oxide-based solid electrolyte is preferably 0.01 µm or more, more preferably 0.1 µm or more, although not particularly restricted. The upper limit of the average particle diameter of the sulfide-based or oxide-based solid electrolyte is preferably 100 µm or less, more preferably 50 µm or less. In addition, the average particle diameter of the sulfide-based or oxide-based solid electrolyte may be measured using the following method.

First, a dispersion solution in which 1 mass% of the solid electrolyte particles are dispersed in a 20 ml sample bottle using water (heptane for a material that is unstable in water) is prepared. Subsequently, an ultrasonic wave of 1 kHz is applied to the dispersion solution for 10 minutes, and a test is immediately performed. For the dispersion solution, data reading is performed 50 times through a quartz cell for measurement at a temperature of 25°C using a laser diffraction/scattering type particle size distribution measurement apparatus LA-920 (HORIBA Company) to obtain a volume average particle diameter as an average particle diameter. For other detailed conditions, a description of JISZ8828:2013 *PARTICLE DIAMETER ANALYSIS - DYNAMIC LIGHT SCATTERING METHOD* may be referenced as needed.

For example, a sulfide, nitride, or halide of Li, such as Li_{6.25}La₃Zr₂A_{10.25}O₁₂, Li₃PO₄, Li₃+xPO₄-xNₓ (LiPON), Li₃N, LiI, Li₅NI₂, Li₃N-LiI-LiOH, LiSiO₄, LiSiO₄-LiI-LiOH, Li₂SiS₃, Li₄SiO₄, or Li₄SiO₄-LiI-LiOH, may be used as the oxide-based solid electrolyte.

In the present invention, the sulfide is not particularly restricted, and all known sulfide-based materials used in a lithium battery field may be available. Products on the market may be used as the sulfide-based materials, or amorphous sulfide-based materials may be crystallized to manufacture the sulfide-based materials. For example, a crystalline sulfide-based solid electrolyte, an amorphous sulfide-based solid electrolyte, or a mixture thereof may be used as the sulfide-based solid electrolyte. There are a sulfur-halogen compound, a sulfur-germanium compound, and a sulfur-silicon compound as examples of available composite compounds. Specifically, a sulfide, such as SiS₂, GeS₂, or B₂S₃, may be included, and Li₃PO₄, halogen, or a halogen compound may be added. Preferably, a sulfide-based electrolyte capable of implementing a lithium ion conductivity of 10⁻⁴ S/cm or more is used.

Typically, Li₆PS₅Cl (LPSCl), Thio-LISICON(Li_{3.25}Ge_{0.25}P_{0.75}S₄), Li₂S-P₂S₅-LiCl, Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃3₁₁, LiI-Li₂S-B₂S₃, Li₃PO₄-Li₂S-Si₂S, Li₃PO₄-Li₂S-SiS₂, LiPO₄-Li₂S-SiS, Li₁₀GeP₂S₁₂, Li_{9.54}Si_{1.74}P_{1.44}S_{11.7}Cl_{0.3}, and Li₇P₃S₁₁ are included.

### (Positive electrode)

The positive electrode applied to the present invention is not particularly restricted, and an electrode active material layer may be bound to an electrode current collector using an ordinary method known in the art to which the present invention pertains to manufacture the positive electrode.

In a concrete embodiment of the present invention, the positive electrode may include a current collector and a positive electrode active material layer formed on at least one surface of the current collector, and the positive electrode active material layer may include a positive electrode active material, a binder, and a conductive agent. The positive electrode may include a solid electrolyte. The solid electrolyte may be the same as above.

In general, the positive electrode current collector is manufactured so as to have a thickness of 3 µm to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase the force of adhesion to the positive electrode active material. The positive electrode current collector may be configured in any of various forms, such as a film, a sheet, a foil, a net, a porous body, a foam body, or a non-woven fabric body.

The positive electrode active material is not particularly restricted as long as the positive electrode active material can be used for a positive electrode of an electrochemical device. For example, the positive electrode active material may include any one selected from the group consisting of LiCoO₂, LiNiO₂, LiMn₂O₄, LiCoPO₄, LiFePO₄, LiNiMnCoO₂, and LiNi_{1-x-y-z}CoₓM1_{y}M2_{z}O₂ (each of M1 and M2 is any distinct one selected from the group consisting of Al, Ni, Co, Fe, Mn, V, Cr, Ti, W, Ta, Mg, and Mo, and x, y, and z are atomic fractions of distinct oxide composition elements, wherein 0 ≤ x < 0.5, 0 ≤ y < 0.5, 0 ≤ z < 0.5, and x+y+z ≤ 1) or a mixture of two or more thereof.

The solid electrolyte included in the positive electrode may be a polymer solid electrolyte, an oxide-based solid electrolyte, or a sulfide-based solid electrolyte.

In a concrete embodiment of the present invention, the positive electrode active material layer may further include a lithium salt.

In a concrete embodiment of the present invention, the lithium salt may include Li⁺ as positive ions, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF6⁻, AsF₆⁻, F₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻, and (CF₃CF₂SO₂)₂N⁻ as negative ions.

The conductive agent is generally added so that the conductive agent accounts for 0.1 to 30 weight% based on the total weight of the mixture including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode, is a component assisting in binding between the active material and the conductive agent and in binding with the current collector. The binder is generally added in an amount of 0.1 to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

In addition, the present invention provides an all-solid-state battery or a lithium secondary battery including the above electrode as a negative electrode. In addition, the present invention provides an all-solid-state battery including the above electrode as a negative electrode. The all-solid-state battery may be an all-solid-state battery including a positive electrode, the negative electrode, and a solid electrolyte layer interposed between the positive electrode and the negative electrode. The conductive coating layer may be disposed on the surface opposite the solid electrolyte layer.

### (Method of manufacturing all-solid-state battery)

In another aspect, the present invention relates to a method of manufacturing an all-solid-state battery.

In addition, the present invention provides a method of manufacturing an all-solid-state battery including (S1) a step of forming a stack including a positive electrode, a solid electrolyte layer, and a negative electrode, (S2) a step of pressurizing the stack, and (S3) a step of charging the pressurized stack while pressurizing the stack, wherein at least one of the negative electrodes is a porous support having a conductive coating layer formed on one surface of the porous support.

In addition, the present invention provides a method of manufacturing a lithium secondary battery including a separator, which replaces the solid electrolyte layer used in the method of manufacturing the all-solid-state battery.

Step (S2) and step (S3) may be performed in reverse order or may be simultaneously performed. Charging of step (S3) may include a step of providing a negative electrode active material layer on the conductive coating layer.

The conductive coating layer may be formed by plating the conductive coating layer onto one surface of the porous support or laminating the conductive coating layer onto one surface of the porous support.

The ratio of the thickness of the porous support before pressurization of the stack to the thickness of the porous support after pressurization of the stack may be 1:0.4 to 1:0.9. At this time, pressurization pressure may be 20 MPa.

After step (S3), lithium may be plated between the conductive coating layer used as the negative electrode and the solid electrolyte layer.

The positive electrode may include a positive electrode active material layer including a metal oxide including lithium.

In step (S2) and step (S3), the porous support may be deformed, whereby pressure applied to the interior of the porous support may be reduced.

### Step (S1) may include the following sub-steps:

(S1-1) a step of preparing a negative electrode including a negative electrode current collector having a conductive coating layer disposed on one surface of a porous support having a plurality of pores;

(S1-2) a step of preparing a positive electrode including a positive electrode current collector and a positive electrode active material layer formed on the positive electrode current collector; and

(S1-3) a step of preparing a battery cell including an electrode assembly including the positive electrode, the negative electrode, and a solid electrolyte layer interposed therebetween.

Step (S1-1) and step (S1-2) are steps of preparing the positive electrode and the negative electrode, respectively, and the sequence thereof is not restricted. That is, the positive electrode may be prepared first, or the negative electrode may be prepared first. Alternatively, the positive electrode and the negative electrode may be simultaneously prepared.

In step (S1-1), the conductive coating layer may be plated onto one surface of the porous support, or the conductive coating layer may be laminated onto one surface of the porous support, whereby the conductive coating layer may be disposed on one surface of the porous support.

At this time, the ratio of the thickness of the porous support before pressurization of the stack to the thickness of the porous support after pressurization of the stack may be 1:0.4 to 1:0.9. At this time, pressurization pressure may be 20 MPa.

As the result of performing step (S3), lithium may be plated between the negative electrode current collector and the solid electrolyte layer. The plated lithium may serve as a negative electrode active material layer. In addition, stress generated due to plating of the lithium may be reduced as the result of compression of the porous support.

Step (S1-1) and step (S1-3) are not particularly restricted as long as these steps are performed using a method commonly used in the art to which the present invention pertains.

Charging of step (S3) is not particularly restricted as long as charging is performed using a method commonly used in the art to which the present invention pertains. In step (S3), lithium discharged from the positive electrode during the charging process may be plated onto the negative electrode current collector, whereby the plated lithium may be used as a negative electrode active material layer.

Also, in step (S2) and/or step (S3), the porous support is deformed to reduce pressure F applied from the outside, and the pressure F is uniformly distributed, whereby pressure applied to the entirety of the battery is reduced. As a result, the position of the positive electrode, the separator/solid electrolyte layer, and the negative electrode is not changed, and when they are pressurized, uniform pressure is applied thereto. Ultimately, therefore, short circuit does not occur in the battery, whereby safety of the battery is improved.

At this time, the porous support is deformed such that the length of the porous support is decreased in a pressurization direction and is increased in a direction perpendicular to the pressurization direction, whereby pressure applied to the entirety of the battery is reduced.

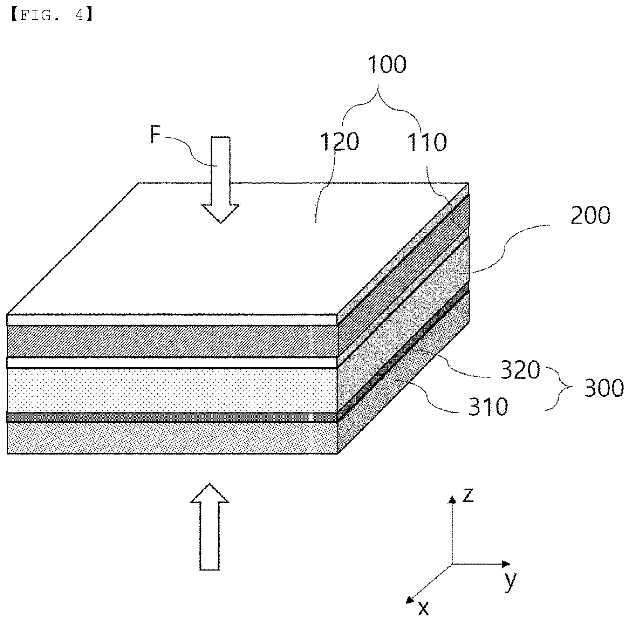

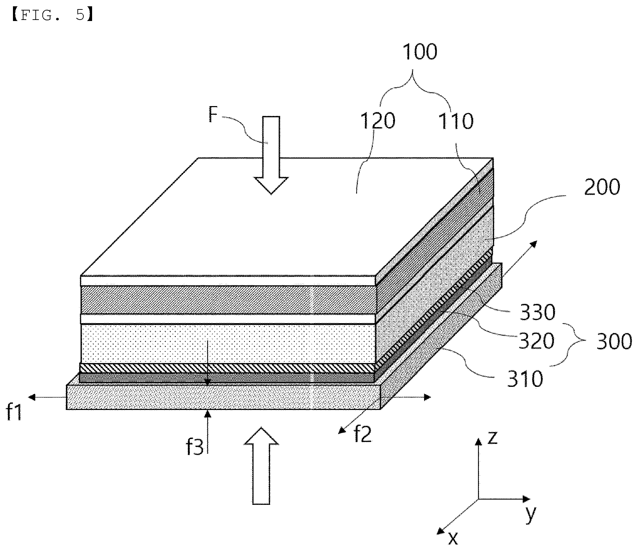

FIG. 4 is a schematic view of an all-solid-state battery according to an embodiment of the present invention, and FIG. 5 is a schematic view of the all-solid-state battery according to the embodiment of the present invention after charging and pressurization.

As can be seen from FIG. 4, the all-solid-state battery according to the present invention is constituted by a positive electrode 100 including a positive electrode current collector 110 and a positive electrode active material layer 120 formed on at least one surface thereof by coating, a separator/solid electrolyte layer 200, and a negative electrode 300 including a porous support 310 and a conductive coating layer 320 applied to at least one surface of the porous support 310.

FIG. 5 is a schematic view of the all-solid-state battery according to the present invention after charging and pressurization. As can be seen from FIG. 5, after charging of the battery according to the present invention, lithium is plated to form a lithium layer 330. The lithium layer 330 is charged under constant current/constant voltage (CC/CV) conditions. At this time, pressure F applied to the entirety of the all-solid-state battery may be changed depending on the amount of lithium formed in the battery and charging and discharging speed and time. In the specification of the present invention, the lithium layer 330 corresponds to a negative electrode active material layer.

First, the size or number of the pores in the porous support 310, to which uniform force has been applied due to the pressure F, is reduced, whereby stress generated by the pressure F is released. When the pressure F is further applied, the length of the porous support 310 is increased by the pressure F in directions perpendicular to the direction in which the pressure F is applied, i.e. width (f1, x) and depth (f2, y) directions of the porous support 310, and the thickness (f3, z) of the porous support 310 in the pressurization direction is decreased, whereby the pressure F applied to the lithium secondary battery is reduced, and therefore force applied to the lithium layer 330 and the entirety of the lithium secondary battery is reduced.

Deformation in the width, depth, and thickness directions may occur, as shown in FIG. 5, or three kinds of deformation, such as deformation in the width and depth directions, deformation in the thickness direction, and deformation in the width, depth, and thickness directions, may occur.

The porous support 310 may be provided on one surface of the positive electrode 100. Since the porous support 310 has the same shape as one used in the negative electrode 300 according to the present invention, the porous support may be provided on the positive electrode 100 instead of the negative electrode 300, or the porous support may be provided on the positive electrode 100 while the negative electrode 300 is used.

FIGs. 4 and 5 according to the present invention may be equally applied to a lithium secondary battery in the case in which the solid electrolyte layer is replaced by a separator.

Hereinafter, examples will be described in detail in order to concretely describe the present invention. However, the examples according to the present invention may be changed into various other forms, and the scope of the present invention should not be interpreted as being limited to the following examples. The examples of the present invention are provided in order to more completely explain the present invention to a person who has ordinary skill in the art to which the present invention pertains.

### (Experiment 1) Experiment of elastic force of porous supports

A polyethylene (hereinafter referred to as "PE") porous support having a porosity of 45% (Example 1-1), a PE porous support having a porosity of 47% (Example 1-2), polyethylene terephthalate (PET) non-woven fabric having a porosity of 49% (Example 1-3), and nickel foam having a porosity of 89% (Comparative Example 1-1) were cut to 26.8 cm x 26.8 cm each, and pressurized at 5 MPa, 10 MPa, 15 MPa, and 20 MPa, respectively. Thicknesses of the porous supports according to Examples 1-1 to 1-3 and Comparative Example 1-1 before and after pressurization were measured. The results are shown in Table 1 below. The thickness after pressurization is a thickness measured after pressurization pressure is removed.

**[Table 1]**

| | **Thickness before pressurization (µm)** | **Thickness after 5 MPa pressurization (µm)** | **Thickness after 10 MPa pressurization (µm)** | **Thickness after 15 MPa pressurization (µm)** | **Thickness after 20 MPa pressurization (µm)** |
|---|---|---|---|---|---|
| Example 1-1 | 9 | 9 | 9 | 8 | 7 |
| Example 1-2 | 16 | 16 | 16 | 15 | 14 |
| Example 1-3 | 19 | 18 | 17 | 15 | 14 |
| Comparative Example 1-1 | 345 | 215 | 153 | 128 | 112 |

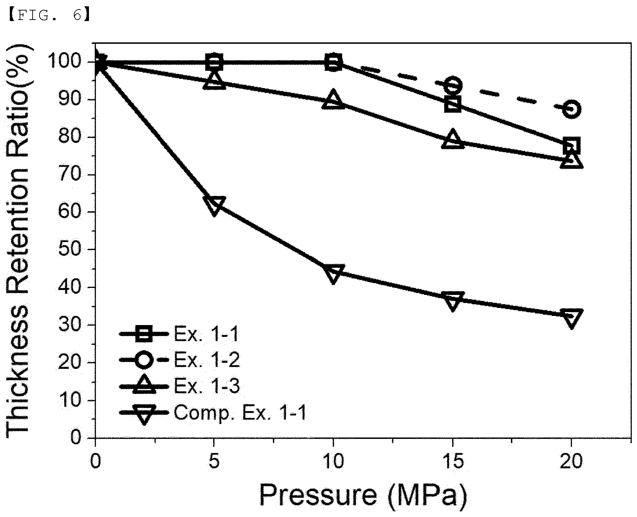

As can be seen from Table 1 above, thickness changes of the porous supports according to Example 1-1, Example 1-2, and Example 1-3 are not great even within various pressurization ranges. FIG. 6 is a graph showing pressurization-based thickness retention rates of the porous supports according to Example 1-1, Example 1-2, Example 1-3, and Comparative Example 1-1. It can be seen that pressurization-based thickness retention rates of the porous supports according to all examples of the present invention are 70% or more even when the porous supports are pressurized at 20 MPa. Here, the pressurization-based thickness retention rate may be calculated as (thickness after pressurization/thickness before pressurization) x 100%.

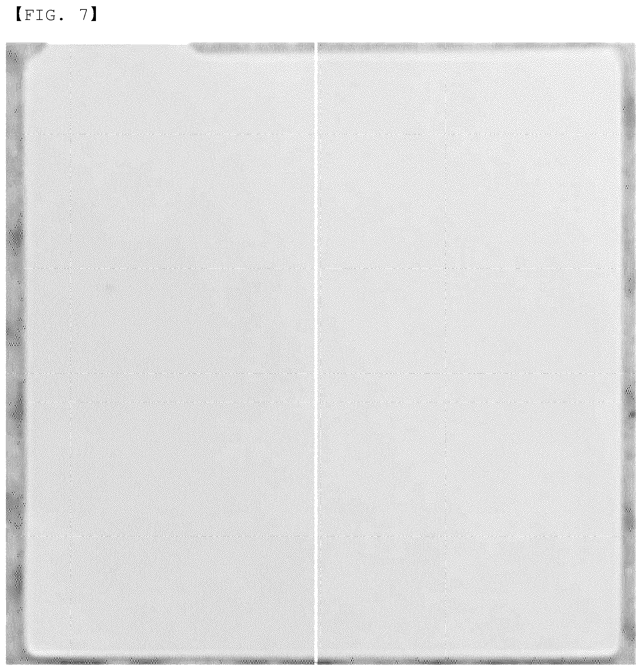

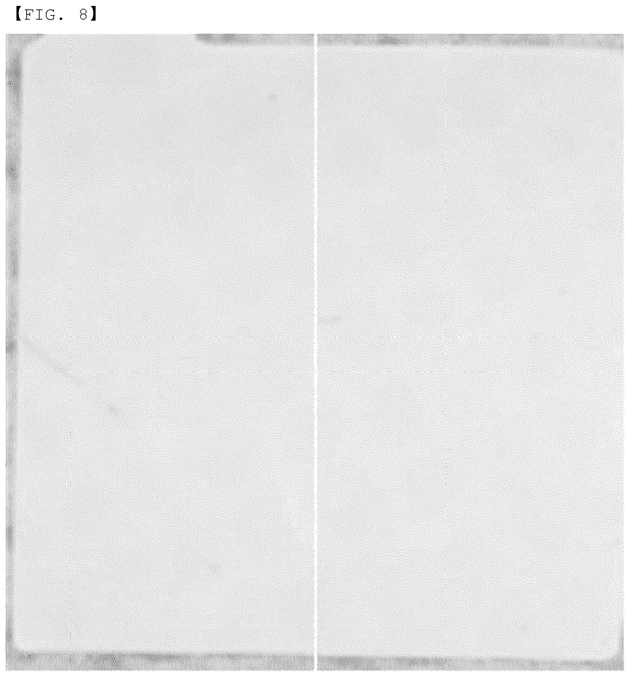

This can be confirmed from FIGS. 7 and 8. FIGS. 7 and 8 are photographs of the porous support according to Example 1-1 before/after pressurization. It can be seen from FIGS. 7 and 8 that there is little difference in thickness and surface shape of the porous support according to Example 1-1 before and after pressurization.

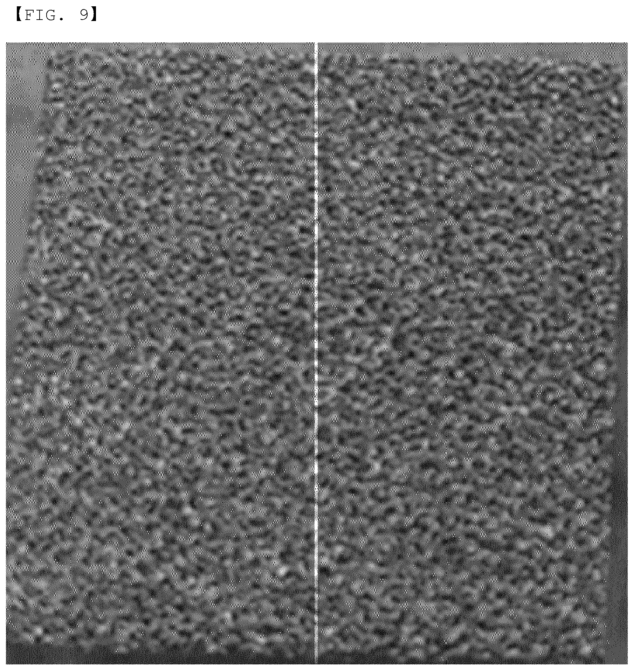

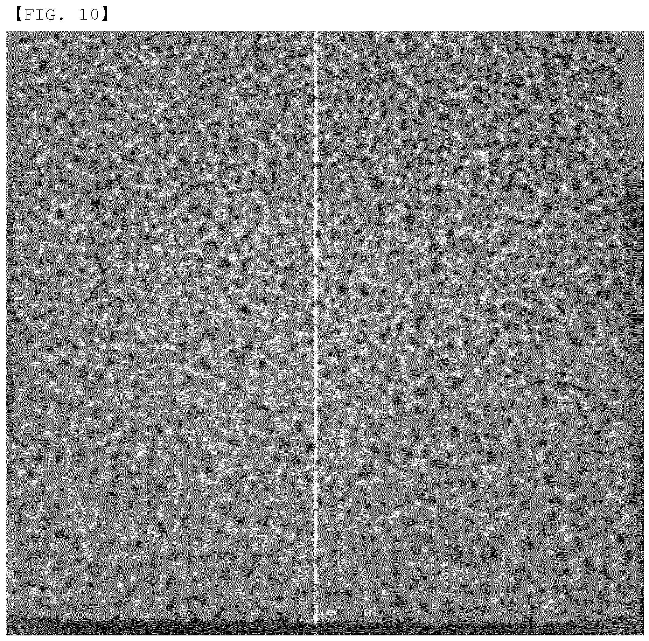

In contrast, thickness strain of the metal (Comparative Example 1-1), which is conventionally used as a current collector, due to pressure is very great. In the case in which a battery is manufactured using the porous support according to Comparative Example 1-1 as a negative electrode current collector, it can be seen that the thickness of the nickel foam is reduced due to increase in thickness of lithium plated at the time of charging the battery but restoration is not possible at the time of discharging, whereby it is difficult to maintain pressure in the battery. FIGS. 9 and 10 are photographs of the support according to Comparative Example 1-1 before/after pressurization. Referring to FIGS. 6, 9, and 10, it can be seen that the thickness of the support according to Comparative Example 1-1 is reduced when pressure is applied thereto and that the surface of the support is smooth.

As can be seen from FIG. 6, the thickness retention rate of the support according to Comparative Example 1-1 at 20 MPa is less than 40%, and is 70% or less even at 5 MPa, which is relatively low. In contrast, it can be seen that the supports according to Example 1-1, Example 1-2, and Example 1-3 have high thickness retention rates of 70% or more even at a high pressure of 20 MPa. Consequently, it can be seen that porosity of the support according to Comparative Example 1-1 is not maintained, whereby it is difficult to reduce stress generated as the result of plating of lithium.

### (Experiment 2) Comparison in resilience between porous supports before and after pressurization

In order to compare resilience between polymer films before and after pressurization, a PET release film (Example 1-4), a PE zipper bag (Example 1-5), and Parafilm (Comparative Example 1-2) were cut to 26.8 cm x 26.8 cm each, and were pressurized by applying weights of 0.5 ton and 6 ton. The thicknesses before pressurization, the thicknesses at the time of pressurization, the restored thicknesses after pressurization, and the areas after pressurization of the porous supports according to Example 1-4, Example 1-5, and Comparative Example 1-2 were measured. The results are shown in Table 2 below.

Here, the PET release film is obtained by thinly coating one surface or opposite surfaces of a PET film with a silicone release agent using a micro-gravure coating method and hardening the same, and may prevent separation and contamination of an adhesive material and may protect an adhesive layer. The PE zipper bag is a product manufactured using PE, among products used as normal zipper bags. The Parafilm is a semitransparent flexible film constituted by a mixture of wax and polyolefin, and is a registered trademark of Bemis Company, Inc. having the head office at Neenah, Wisconsin, USA.

**[Table 2]**

| | **Before pressurization** | | **0.5 ton pressurization** | | | **6 ton pressurization** | | |
|---|---|---|---|---|---|---|---|---|
| | **Area (cm²)** | **Thickness (µm)** | **Thickness at the time of pressurization (µm)** | **Area after pressurization (cm²)** | **Thickness after pressurization (µm)** | **Thickness at the time of pressurization (µm)** | **Area after pressurization (cm²)** | **Thickness after pressurization (µm)** |
| Example 1-4 | 26.8* 26.8 | 100 | 99 | 26.8*26 .8 | 100 | 98 | 26.8*26 .8 | 100 |
| Example 1-5 | 26.8* 26.8 | 55 | 54 | 26.8*26 .8 | 55 | 52 | 27.1*27 .1 | 54 |
| Comparative Example 1-2 | 26.8* 26.8 | 140 | 135 | 27.3*27 .3 | 135 | 132 | 27.6*27 .6 | 132 |

It can be seen from Table 2 above that the area and thickness of the PET release film (Example 1-4) before pressurization are equal to the area and thickness thereof after pressurization, the PE zipper bag exhibits elastic properties similar to those of the PET release film, but elastic force of the Parafilm is reduced. As described above, it can be seen that the films exhibit very different physical properties even though polymers are used.

### (Experiment 3) Measurement of electrical conductivities of conductive coating layers

As shown in FIG. 3, samples according to Examples 2-1 to 2-6 and Comparative Examples 2-1 to 2-3 each having a size of 5 cm x 5 cm were prepared. In order to measure electrical conductivity, measurement was performed at 25 zones using 4-point probe equipment. Rs of the average of the measured values was obtained to calculate electrical conductivity. Electrical conductivities of the samples are shown in Table 3 below for comparison.

**[Table 3]**

| **Classification** | **Metal** | **Porous support** | **Thickness of metal coating layer (µm)** | **Rs (=ρ/t, Ω/sq)** | **ρcal (uΩ.cm)** | **ρbulk (uΩ.cm)** |
|---|---|---|---|---|---|---|
| Example 2-1 | Ag | Example 1-1 | 2 | 0.805*10⁻² | 1. 61 | 1. 62 |
| Example 2-2 | Ag | Example 1-2 | 2 | 0.789*10⁻² | 1.58 | 1. 62 |
| Example 2-3 | Ag | Example 1-1 | 1 | 1.566*10⁻² | 1.57 | 1. 62 |
| Example 2-4 | Au | Example 1-1 | 1 | 2.115*10⁻² | 2.12 | 2.4 |
| Example 2-5 | Ag | Example 1-4 | 1 | 1.759*10⁻² | 1.76 | 1. 62 |
| Example 2-6 | Ag | Example 1-4 | 2 | 0.875*10⁻² | 1.75 | 1.62 |
| Comparative Example 2-1 (Metal current collector) | **Ni** | - | 11 (not plated) | 0.735*10⁻² | **8.09** | **7.24** |
| Comparative Example 2-2 | - | Example 1-1 | 0 | **Not measured** | | - |
| Comparative Example 2-3 (Metal current collector) | Stainless steel (Product name: SUS304) | | 10 (not plated) | 0.743*10⁻¹ | **74.2** | **72** |

In Table 3, Rs indicates a resistance value measured using equipment, pcal indicates a resistivity value calculated by applying a thickness, and pbulk indicates a resistivity value of a generally known material.

In the case in which silver (Ag) is plated on a porous support to manufacture a thinned negative electrode current collector, as in each of Examples 2-1 to 2-3, 2-5, and 2-6 of Table 3, the negative electrode current collector has a resistance value similar to the resistance value of a general nickel current collector. The reason for this seems to be that silver has affinity for lithium. Even in the case in which the thickness of a plated silver coating layer is 1 µm, which is ultrathin, as in each of Examples 2-3 and 2-5, the silver coating layer exhibits electrical conductivity remarkably higher than the electrical conductivity of the stainless steel SUS304 current collector, which is commonly used in the art to which the present invention pertains.

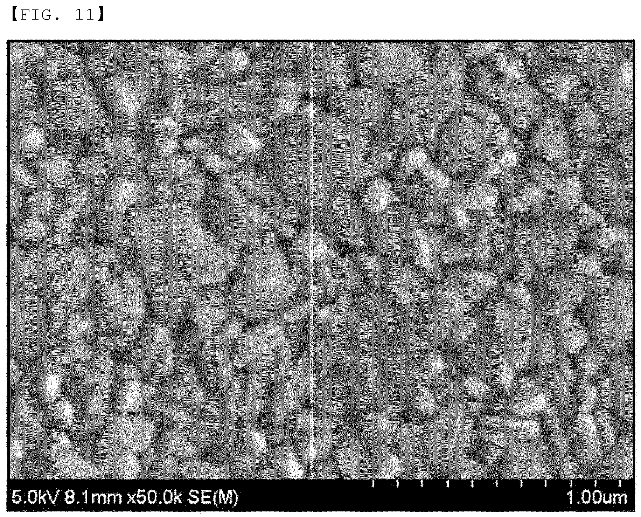

It can be seen from Table 3 that, in the case in which a metal is plated onto a porous support so as to be used as a negative electrode current collector, pcal values and pbulk values are equal to or similar to each other, and therefore the metal is uniformly plated. FIG. 11 is an SEM photograph showing the surface of the negative electrode current collector according to Example 2-3. It can be seen that plated silver (Ag) particles are in dense contact with each other, whereby the silver particles have conductivity. In addition, it can be seen that, as in Table 3, a metal having electrical conductivity, such as silver (Ag) or gold (Au), can be used as a negative electrode current collector together with the porous support.

In the case in which there was no metal layer, as in Comparative Example 2-2, by contrast, the resistance value of the porous support was high, whereby it was not possible to measure Rs. That is, it can be seen that, in the case in which only the porous support is provided without a metal layer, the porous support cannot be used as a negative electrode current collector.

### (Experiment 4) Battery performance evaluation

Batteries based on the negative electrode current collectors obtained through Experiment 1 to Experiment 3 were compared with each other in terms of performance.

In Experiment 4, the result of first charging and discharging (charging conditions: constant current (CC)/constant voltage (CV), (4.25V, 0.05C, 0.01C current cut-off) and discharging conditions: constant current (CC), 3V, 0.05C, 60°C), initial capacity, efficiency, and cell short circuit occurrence rate were measured using a negative electrode having the following construction.

The initial capacity was measured by performing charging and discharging at 60°C, and the efficiency obtained by dividing discharging capacity by charging capacity. The results are shown in Table 4 below.

### (Example 3-1)

The negative electrode according to Example 2-3 was used as a negative electrode.

A positive electrode was manufactured as follows. Specifically, NCM811(LiNi_{0.8}Co_{0.1}Mn_{0.1}O₂) as a positive electrode active material, Li₆PS₅Cl as an argyrodite solid electrolyte, carbon black as a conductive agent, and polytetrafluoroethylene (PTFE) as a binder polymer, were dispersed and stirred in anisole in the weight ratio of 77.5:19.5:1.5:1.5 to manufacture a positive electrode slurry. The positive electrode slurry was applied to an aluminum current collector having a thickness of 15 µm using a doctor blade, and was dried under vacuum at 100°C for 12 hours.

The solid electrolyte was manufactured as follows. Specifically, Li₆PS₅Cl as an argyrodite solid electrolyte, and polytetrafluoroethylene (PTFE) as a binder polymer, were dispersed and stirred in anisole in a weight ratio of 95:5 to manufacture a slurry. The slurry was applied to an aluminum current collector having a thickness of 15 µm using a doctor blade, and was dried under vacuum at 100°C for 12 hours.

The manufactured positive electrode, the manufactured solid electrolyte layer, and the negative electrode were sequentially stacked to manufacture an electrode assembly. Subsequently, the electrode assembly was put between jigs and a pressure of 5 MPa was applied to the electrode assembly.

### (Example 3-2)

This is identical to Example 3-1 except that a nickel foil having a thickness of 11 µm and the porous support according to Example 1-1 are used instead of the negative electrode.

### (Example 3-3)

This is identical to Example 3-2 except that the porous support according to Example 1-3 is used instead of the porous support according to Example 1-1.

### (Example 3-4)

This is identical to Example 3-2 except that the electrode assembly is fastened to the jigs such that a force of 10 MPA is applied thereto instead of a pressure of 5 MPa.

### (Example 3-5)

This is identical to Example 3-1 except that a nickel foil having a thickness of 11 µm and the porous support according to Example 1-4 are used instead of the negative electrode.

### (Example 3-6)

This is identical to Example 3-1 except that a nickel foil having a thickness of 11 µm and the porous support according to Example 1-5 are used instead of the negative electrode.

### (Comparative Example 3-1)

This is identical to Example 3-2 except that the negative electrode does not have the porous support according to Example 1-1.

### (Comparative Example 3-2)

Experiment was performed in the same manner as in Example 3-2 except that PET non-woven fabric having a porosity of 47% is used instead of the porous support according to Example 1-1. The PET non-woven fabric having the porosity of 47% is non-woven fabric that has low elastic deformation and thus has very low thickness strain due to pressure.

Table 4 shows experimental results of Examples 3-1 to 3-6 and Comparative Examples 3-1 and 3-2.

**[Table 4]**

| Classification | Charge (mAh/g), 60°C, 4.2V | Discharge (mAh/g), 60°C, 3V | Efficiency (%) | Short circuit occurrence rate (%) | Lifespan evaluation (0.1C, CC charging/discharging, 3.7 to 4.2V, 60°C) |
|---|---|---|---|---|---|
| Example 3-1 | 228 | 201 | 88.2 | 0 | 83% @50 cycle maintained |
| Example 3-2 | 223 | 205 | 91.9 | 0 | |
| Example 3-3 | 224 | 204 | 91.1 | 0 | |
| Example 3-4 | 226 | 206 | 91.2 | 33 | |
| Example 3-5 | 222 | 205 | 92.3 | 0 | |
| Example 3-6 | 225 | 207 | 92.1 | 25 | |
| Comparative Example 3-1 | 227 | 201 | 88.5 | 75 | Short circuit occurred at the time of second charging, and therefore measurement for lifespan evaluation was not possible |
| Comparative Example 3-2 | 226 | 199 | 88.1 | 67 | |

It can be seen from Table 4 above that, in the case in which a porous support according to an embodiment of the present invention is used, the battery short circuit occurrence rate is remarkably low. In the case in which only a metal layer is provided without a separate porous support, as in Comparative Example 3-1, the short circuit occurrence rate is high, whereby it is difficult to use the metal layer as a negative electrode current collector.

It can be seen that, in the case in which a porous support that exhibits high elastic force is used, as in each of Examples 3-1 to 3-3, 3-5, and 3-6, the battery short circuit occurrence rate is remarkably lower than the case in which no porous support is used. When comparing Examples 3-5 and 3-6 with each other, it can be seen that, even in the case in which the porous support is used, the short circuit occurrence rate is lower as the rate of restoration of the porous support to the original state after pressurization is higher.

In the case of Example 3-4, the short circuit occurrence rate still has an excellent value even though pressurization pressure is increased to 10 MPa.

The support according to Comparative Example 3-2 is made of non-woven fabric having excessively low thickness strain due to pressure, whereby fabrics in the non-woven fabric are not particularly contracted, and pressure is concentrated on junctions between the fabrics. As a result, lithium is nonuniformly plated onto the surface of the current collector at the time of charging and discharging, whereby the short circuit occurrence rate of the secondary battery is higher than in Examples.

It can be seen from Table 4 that, in the case in which a negative electrode according to the present invention is used, safety of a battery is improved. In addition, it can be seen that the efficiency of the battery is maintained or increased.

### (Description of Reference Symbols)

10, 100: Positive electrodes
11, 110: Positive electrode current collectors
12, 120: Positive electrode active material layers
20, 200: Solid electrolyte layers
30, 300: Negative electrodes
31: Negative electrode current collector
310: Porous support
320: Conductive coating layer
330: Negative electrode active material layer, lithium layer
F: Pressurization force
f1: Width
f2: Depth
f3: Thickness

### [Industrial Applicability]

The present invention relates to an all-solid-state battery comprising a negative electrode including a porous support and a conductive coating layer formed on at least one surface of the porous support, and therefore the present invention has industrial applicability.

## Claims

1. An all-solid-state battery comprising a negative electrode (300) comprising:
a porous support (310); and
a conductive coating layer (320) formed on at least one surface of the porous support (310),
wherein the porous support (310) comprises an elastic material,
wherein the porous support (310) has a pressurization-based thickness retention rate of 70% or more, the pressurization-based thickness retention rate being calculated as (thickness after pressurization/thickness before pressurization) x 100%.

2. The all-solid-state battery according to claim 1, wherein the porous support (310) is a porous polymer film or porous polymer non-woven fabric that has a plurality of pores and is elastically deformable.

3. The all-solid-state battery according to claim 1, wherein the porous support (310) further comprises at least one of ceramics, metal, or a metal alloy in a polymer having a porous structure.

4. The all-solid-state battery according to claim 1, wherein the porous support (310) has a pressurization-based elastic strain of 30% or less, the pressurization-based elastic strain being calculated as (thickness before pressurization - thickness under 20 MPa pressurization)/thickness before pressurization x 100%.

5. The all-solid-state battery according to claim 1, wherein:
the negative electrode (300) comprises the conductive coating layer (320) and a negative electrode active material layer (330), and
the negative electrode active material layer (330) is formed on the conductive coating layer (320) by plating through a charging process of a battery and is stripped from a surface of the conductive coating layer (320) through a discharging process of the battery.

6. The all-solid-state battery according to claim 1, wherein the conductive coating layer (320) is a metal or metal oxide layer formed on a surface of the porous support (310) or a surface of each pore formed in the porous support (310) by coating.

7. The all-solid-state battery according to claim 1, wherein the conductive coating layer (320) comprises a metal having electrical conductivity.

8. The all-solid-state battery according to claim 7, wherein a lithium affinity material is at least one selected from the group consisting of metals, comprising Au, Ag, Fe, Mg, Al, Ti, Cr, Ni, Cu, Zn, In, Sn, Pt, Co, Mn, Li, Bi, and Si, and metal oxides, comprising CuO, ZnO, MnO, and CoO.

9. A method of manufacturing an all-solid-state battery, the method comprising:
(S1) forming a stack comprising a positive electrode (100), a solid electrolyte layer (200), and a negative electrode (300);
(S2) pressurizing the stack; and
(S3) charging the pressurized stack while pressurizing the stack,
wherein at least one of the negative electrodes (300) is a porous support (310) having a conductive coating layer (320) formed on one surface of the porous support (310).

10. The method according to claim 9, wherein the step (S2) and the step (S3) are performed in reverse order or performed simultaneously.

11. The method according to claim 9, wherein the conductive coating layer (320) is formed by plating the conductive coating layer (320) onto one surface of the porous support (310) or laminating the conductive coating layer (320) onto one surface of the porous support (310).

12. The method according to claim 9, wherein a ratio of a thickness of the porous support (310) before pressurization of the stack to a thickness of the porous support (310) after pressurization of the stack is 1:0.4 to 1:0.9.

## Patentansprüche

1. Festkörperbatterie, umfassend eine negative Elektrode (300), umfassend:
einen porösen Träger (310); und
eine leitfähige Beschichtungsschicht (320), die auf mindestens einer Oberfläche des porösen Trägers (310) ausgebildet ist,
wobei der poröse Träger (310) ein elastisches Material umfasst,
wobei der poröse Träger (310) eine auf Druckbeaufschlagung basierende Dickenretentionsrate von 70% oder mehr aufweist, wobei die auf Druckbeaufschlagung basierende Dickenretentionsrate als (Dicke nach Druckbeaufschlagung/Dicke vor Druckbeaufschlagung) x 100% berechnet wird.

2. Festkörperbatterie nach Anspruch 1, bei der der poröse Träger (310) ein poröser Polymerfilm oder ein poröser Polymervliesstoff ist, der eine Vielzahl von Poren aufweist und elastisch verformbar ist.

3. Festkörperbatterie nach Anspruch 1, bei der der poröse Träger (310) ferner mindestens eines von Keramik, Metall oder einer Metalllegierung in einem Polymer mit einer porösen Struktur umfasst.

4. Festkörperbatterie nach Anspruch 1, bei der der poröse Träger (310) eine auf Druckbeaufschlagung basierende elastische Dehnung von 30% oder weniger aufweist, wobei die auf Druckbeaufschlagung basierende elastische Dehnung als (Dicke vor Druckbeaufschlagung - Dicke unter 20 MPa Druckbeaufschlagung)/Dicke vor Druckbeaufschlagung x 100% berechnet wird.

5. Festkörperbatterie nach Anspruch 1, bei der die negative Elektrode (300) die leitfähige Beschichtungsschicht (320) und eine Negativelektroden-Aktivmaterialschicht (330) umfasst, und
die Negativelektroden-Aktivmaterialschicht (330) auf der leitfähigen Beschichtungsschicht (320) durch Plattieren durch einen Ladevorgang einer Batterie gebildet wird und von einer Oberfläche der leitfähigen Beschichtungsschicht (320) durch einen Entladevorgang der Batterie abgezogen wird.

6. Festkörperbatterie nach Anspruch 1, bei der die leitfähige Beschichtungsschicht (320) eine Metall- oder Metalloxidschicht ist, die auf einer Oberfläche des porösen Trägers (310) oder einer Oberfläche jeder Pore ausgebildet ist, die in dem porösen Träger (310) durch Beschichten ausgebildet ist.

7. Festkörperbatterie nach Anspruch 1, bei der die leitfähige Beschichtungsschicht (320) ein Metall mit elektrischer Leitfähigkeit umfasst.

8. Festkörperbatterie nach Anspruch 7, bei der ein Lithiumaffinitätsmaterial mindestens eines ausgewählt aus der Gruppe bestehend aus Metallen, umfassend Au, Ag, Fe, Mg, Al, Ti, Cr, Ni, Cu, Zn, In, Sn, Pt, Co, Mn, Li, Bi und Si, und Metalloxiden, umfassend CuO, ZnO, MnO und CoO, ist.

9. Verfahren zur Herstellung einer Festkörperbatterie, wobei das Verfahren umfasst:
(S1) Bilden eines Stapels, umfassend eine positive Elektrode (100), eine Festelektrolytschicht (200) und eine negative Elektrode (300);
(S2) Druckbeaufschlagen des Stapels; und
(S3) Laden des druckbeaufschlagten Stapels, während der Stapel druckbeaufschlagt wird,
wobei mindestens eine der negativen Elektroden (300) ein poröser Träger (310) mit einer leitfähigen Beschichtungsschicht (320) ist, die auf einer Oberfläche des porösen Trägers (310) ausgebildet ist.

10. Verfahren nach Anspruch 9, bei dem der Schritt (S2) und der Schritt (S3) in umgekehrter Reihenfolge oder gleichzeitig durchgeführt werden.

11. Verfahren nach Anspruch 9, bei dem die leitfähige Beschichtungsschicht (320) durch Plattieren der leitfähigen Beschichtungsschicht (320) auf eine Oberfläche des porösen Trägers (310) oder Laminieren der leitfähigen Beschichtungsschicht (320) auf eine Oberfläche des porösen Trägers (310) gebildet wird.

12. Verfahren nach Anspruch 9, bei dem ein Verhältnis einer Dicke des porösen Trägers (310) vor Druckbeaufschlagung des Stapels zu einer Dicke des porösen Trägers (310) nach Druckbeaufschlagung des Stapels 1:0,4 bis 1:0,9 beträgt.

## Revendications

1. Batterie tout-solide comprenant une électrode négative (300) comprenant :
un support poreux (310) ; et
une couche de revêtement conducteur (320) formée sur au moins une surface du support poreux (310),
dans laquelle le support poreux (310) comprend un matériau élastique,
dans laquelle le support poreux (310) a un taux de rétention d'épaisseur basé sur une pressurisation de 70 % ou plus, le taux de rétention d'épaisseur basé sur la pressurisation est calculé être (épaisseur après pressurisation/épaisseur avant pressurisation) x 100 %.

2. Batterie tout-solide selon la revendication 1, dans laquelle le support poreux (310) est un film polymère poreux ou un tissu non tissé polymère poreux qui a une pluralité de pores et est déformable élastiquement.

3. Batterie tout-solide selon la revendication 1, dans laquelle le support poreux (310) comprend en outre au moins un élément parmi une céramique, un métal ou un alliage métallique dans un polymère ayant une structure poreuse.

4. Batterie tout-solide selon la revendication 1, dans laquelle le support poreux (310) a une déformation élastique basée sur une pressurisation de 30 % ou moins, la déformation élastique basée sur la pressurisation est calculée être (épaisseur avant pressurisation - épaisseur sous pressurisation de 20 MPa)/épaisseur avant pressurisation x 100 %.

5. Batterie tout-solide selon la revendication 1, dans laquelle :
l'électrode négative (300) comprend la couche de revêtement conducteur (320) et une couche de matériau actif d'électrode négative (330), et
la couche de matériau actif d'électrode négative (330) est formée sur la couche de revêtement conducteur (320) par placage par un processus de charge d'une batterie et est décapée d'une surface de la couche de revêtement conducteur (320) par un processus de décharge de la batterie.

6. Batterie tout-solide selon la revendication 1, dans laquelle la couche de revêtement conducteur (320) est une couche de métal ou d'oxyde métallique formée sur une surface du support poreux (310) ou une surface de chaque pore formée dans le support poreux (310) par revêtement.

7. Batterie tout-solide selon la revendication 1, dans laquelle la couche de revêtement conducteur (320) comprend un métal ayant une conductivité électrique.

8. Batterie tout-solide selon la revendication 7, dans laquelle un matériau à affinité lithium est un ou plusieurs éléments sélectionnés dans le groupe constitué de métaux, comprenant Au, Ag, Fe, Mg, Al, Ti, Cr, Ni, Cu, Zn, In, Sn, Pt, Co, Mn, Li, Bi et Si, et des oxydes métalliques comprenant CuO, ZnO, MnO et CoO.

9. Procédé de fabrication d'une batterie tout-solide, le procédé consistant à :
(S1) former un empilement comprenant une électrode positive (100), une couche d'électrolyte solide (200) et une électrode négative (300) ;
(S2) pressuriser l'empilement ; et
(S3) charger l'empilement pressurisé tout en pressurisant l'empilement,
dans laquelle au moins une des électrodes négatives (300) est un support poreux (310) ayant une couche de revêtement conducteur (320) formée sur une surface du support poreux (310).

10. Procédé selon la revendication 9, dans lequel l'étape (S2) et l'étape (S3) sont effectuées dans l'ordre inverse ou effectuées simultanément.

11. Procédé selon la revendication 9, dans lequel la couche de revêtement conducteur (320) est formée en plaquant la couche de revêtement conducteur (320) sur une surface du support poreux (310) ou en stratifiant la couche de revêtement conducteur (320) sur une surface du support poreux (310).

12. Procédé selon la revendication 9, dans lequel un rapport d'une épaisseur du support poreux (310) avant pressurisation de l'empilement à une épaisseur du support poreux (310) après pressurisation de l'empilement est 1:0,4 à 1:0,9.
